# EUROPÄISCHE PATENTANMELDUNG

(11) **EP 1 923 237 A2**
(43) Veröffentlichungstag der Anmeldung: **21.05.2008**
(21) Anmeldenummer: 08151916.7
(22) Anmeldetag: 12.12.2005
(51) Int. Cl.: B60C 17/00, B60C 15/06

(54) **Fahrzeugluftreifen**

(30) Priorität: 19.01.2005 DE 102005002402
(62) Teilanmeldung aus: 05111938.6
(71) Anmelder: Continental Aktiengesellschaft, 30165 Hannover (DE)
(72) Erfinder: Kaiser, Silvia, 30659 Hannover (DE)
(74) Vertreter: Finger, Karsten

(57) **Zusammenfassung**

Die Erfindung betrifft einen Fahrzeugluftreifen in radialer Bauart mit einem profilierten Laufstreifen, einem insbesondere mehrlagigen Gürtelverband, einer Innenschicht, einer zumindest einlagig ausgeführten Karkasse, welche in Wulstbereichen um Wulstkerne unter Bildung eines Hochschlages geführt ist, Seitenwänden und mit zumindest je einem im Bereich jeder Seitenwand eingebrachten, im Querschnitt in etwa mondsichelförmigen Verstärkungsprofil, wobei die Karkasse axial innen an der Innenseite des Verstärkungsprofils entlang läuft und der Karkasshochschlag radial außerhalb der Wulstkerne und axial außerhalb des Verstärkungsprofils bis in eine Höhe von wenigstens 15% der maximalen Querschnittshöhe des Reifens um den Wulstkern herum geführt ist. Erfindungsgemäß ist das Verstärkungsprofil jeweils auf dem Wulstkern aufgesetzt, wobei sich das Verstärkungsprofil radial vom Wulstkern bis unterhalb des Gürtelverbandes erstreckt und wobei das Verstärkungsprofil aus zwei oder mehr Verstärkungsprofilteilen zusammengesetzt ist, die jedes für sich im Querschnitt etwa mondsichelförmig ausgeführt sind und gemeinsam zumindest im Wesentlichen die Querschnittsfläche eines einteiligen Verstärkungsprofils einnehmen, aber aus unterschiedlichen Gummimischungen bestehen.

## Beschreibung

Die Erfindung betrifft einen Fahrzeugluftreifen in radialer Bauart mit einem profilierten Laufstreifen, einem insbesondere mehrlagigen Gürtelverband, einer Innenschicht, einer zumindest einlagig ausgeführten Karkasse, welche in Wulstbereichen um Wulstkerne unter Bildung eines Hochschlages geführt ist, Seitenwänden und mit zumindest je einem im Bereich jeder Seitenwand eingebrachten, im Querschnitt in etwa mondsichelförmigen Verstärkungsprofil, wobei die Karkasse axial innen an der Innenseite des Verstärkungsprofils entlang läuft und der Karkasshochschlag radial außerhalb der Wulstkerne und axial außerhalb des Verstärkungsprofils bis in eine Höhe von wenigstens 15% der maximalen Querschnittshöhe des Reifens um den Wulstkern herum geführt ist.

Ein derartiger, im Pannenfall selbstragender Fahrzeugluftreifen ist aus der EP 0 911 188 A1 bekannt geworden. Die im Bereich der Seitenwände des Reifens eingebauten Verstärkungsprofile werden bezüglich ihrer Querschnittsform und bezüglich der Eigenschaften ihrer elastomeren Mischung derart ausgeführt, dass sie in der Lage sind, den Reifen bei einem plötzlichen Druckverlust, also im Pannenfall, auf eine gewisse Zeit bzw. über eine gewisse Laufleistung selbsttragend zu erhalten. Das Verstärkungsprofil ist radial oben auf das Kernprofil zwischen der Karkasslage und dem Karkasshochschlag aufgesetzt, angeordnet. Das Kernprofil und das Verstärkungsprofil bestehen aus zwei unterschiedlichen Materialien mit unterschiedlichen Eigenschaften.
Bekannt sind auch selbsttragende Reifen, deren Verstärkungsprofil zwischen Innenschicht und Karkasse angeordnet ist, wie es beispielsweise aus der DE 2 331 530 A offenbart ist. Die hier vorgesehenen elastomeren Verstärkungselemente weisen jeweils eine maximale Dicke von 4 mm bis 20 mm auf. Aus der DE 29 43 654 A ist es beispielsweise bekannt, dass das die Selbsttragefähigkeit des Reifens gewährleistende Verstärkungsprofil aus mehreren Profilteilen unterschiedlicher Härten besteht.

Der Erfindung liegt die Aufgabe zu Grunde, einen Fahrzeugluftreifen der eingangs genannten Art zu optimieren, um im normalen Betrieb trotz Verstärkungsprofilen die Erwärmung gering zu halten, gute Komforteigenschaften sicher zu stellen und im Pannenfall die gewünschte Selbsttragefähigkeit des Reifens zu gewährleisten. Ferner soll ein derartiger Reifen einfach und preiswert herzustellen sein.

Gelöst wird die gestellte Aufgabe erfindungsgemäß dadurch, dass das Verstärkungsprofil jeweils auf dem Wulstkern aufgesetzt ist, wobei sich das Verstärkungsprofil radial vom Wulstkern bis unterhalb des Gürtelverbandes erstreckt und dass das Verstärkungsprofil aus zwei oder mehr Verstärkungsprofilteilen zusammengesetzt ist, die jedes für sich im Querschnitt etwa mondsichelförmig ausgeführt sind und gemeinsam zumindest im Wesentlichen die Querschnittsfläche eines einteiligen Verstärkungsprofils einnehmen, aber aus unterschiedlichen Gummimischungen bestehen.

Gemäß der Erfindung sitzen also die Verstärkungsprofile mehr oder weniger direkt auf den Wulstkernen auf, wobei sie von der Karkasse zumindest teilweise umschlossen bzw. in dieser eingebettet sind. Bislang wurden die Verstärkungsprofile - auch herstellungsbedingt - axial innen an die Karkasse angelegt, so dass die Verstärkungsprofile außerhalb der Krakassumschlingung angeordnet waren. Der Wulstkern war bislang mit einem sogenannten Kernprofil oder Apex versehen; die Karkasse lief hier axial innen am Apex entlang, wurde um den Wulstkern herumgeführt und lief dann axial außen am Apex hoch. Nunmehr wird aber die Karkasse axial innen am Verstärkungsprofil entlang geführt, wobei das Verstärkungsprofil direkt auf dem Kern aufliegt.

Dies führt überraschenderweise zu einer Erhöhung der Stabilität des Verstärkungsprofils und damit des Fahrzeugreifens, wobei gleichzeitig die Komforteigenschaften verbessert werden. Auch im Herstellungsprozeß lassen sich mit der erfindungsgemäßen Konstruktion Vorteile erzielen. Abgesehen davon, dass auf einen separaten Wulstkern verzichtet werden kann, ist als Vorteil zu nennen, dass ein derartig ausgestalteter Reifen auf normalen Bautrommeln hergestellt werden kann, Bautrommeln also, die keine spezielle Taschen oder Ausnehmungen zum Auflegen der Verstärkungsprofile benötigen.
In dieser erfindungsgemäßen zwei- oder mehrteilige Ausführungsform lässt sich das Apex-/Verstärkungsprofil-Bauteil in axialer Richtung aus unterschiedlichen Stücken zusammensetzen und hierdurch die gewünschten Eigenschaften einstellen.

So kann gemäß einer vorteilhaften Ausgestaltung der Erfindung vorgesehen sein, dass die eine Mischung des aus wenigstens zwei unterschiedlichen Kautschukmischungen bestehenden Verstärkungsprofils eine Mischung der Shore A - Härte von 60 - 70, und eine andere Mischung eine Shore A - Härte von 70 - 80 aufweist.

Gemäß weiteren praktischen Ausgestaltungen kann desweiteren vorgesehen sein, dass sich der Hochschlag der Karkasse bis unterhalb des Gürtelverbandes erstreckt, dass das Verstärkungsprofil aus einer Kautschukmischung mit einem Anteil an Silica besteht, und dass sich der Hochschlag der Karkasse bis wenigstens 15 % der Höhe der Reifenseitenwand erstreckt, wobei eine separate Verstärkungslage ein freies axial außen angeordnetes Ende der Karkasse bedeckt und sich bis unterhalb des Gürtelverbandes erstreckt. Ebenso ist denkbar, dass axial außerhalb des Karkasshochschlages ein Zusatzprofil angeordnet ist, welches sich vorzugsweise bis auf eine Höhe von 25% bis 30% der maximalen Querschnittshöhe des Reifens erstreckt.

Schließlich ist es auch möglich, dass die Härte des Zusatzprofils zumindest im Wesentlichen der Härte des Verstärkungsprofils entspricht, ferner, dass die maximale Dicke des Verstärkungsprofils 4mm bis 25 mm beträgt.

Im Rahmen praktischer Weiterbildungen liegt es auch, wenn axial außen an der Karkasse im Bereich des Wulstkernes ein Wulstverstärker angeordnet ist, welcher aus textilen oder metallischen Fäden besteht.

Ein besonderer Aspekt der Erfindung ist eine Karkasse, welche unterschiedliche Festigkeiten aufweist, wobei die Karkasse im axial inneren Bereich eine geringere Festigkeit aufweist, als axial außen.

Es kann ferner von Vorteil sein, axial außerhalb des Karkasshochschlages ein Zusatzprofil anzuordnen, welches sich vorzugsweise bis auf eine Höhe von 25% bis 30% der Querschnittshöhe des Reifens erstreckt. Das Zusatzprofil und das zugehörige Verstärkungsprofil können gemeinsam derart ausgelegt werden, dass die Seitenwände des Reifens bis auf eine Höhe von etwa 75% der maximalen Querschnittshöhe im Wesentlich konstant breit sind.

Der Fahrzeugluftreifen ist bei einem Druckverlust im Pannenfall in der Lage, zumindest über eine gewisse Laufleistung soweit tragfähig zu bleiben, dass eine Weiterfahrt möglich ist. Die wesentlichen Bauteile, aus welchen sich ein Ausführungsbeispiel eines erfindungsgemäßen Reifens zusammensetzt, sind ein profilierter Laufstreifen, ein beispielsweise zweilagig ausgeführter Gürtel, eine insbesondere einlagig, bei Reifen mit hoher Tragfähigkeit vorzugsweise zweilagig, ausgeführte Karkasse, eine luftdicht bzw. weitgehend luftdicht ausgeführte Innenschicht, Wülste mit Wulstkernen, Seitenwände und im Querschnitt etwa mondsichelförmige Verstärkungsprofile. Nahe der Wulstbereiche können die Seitenwände umlaufend mit Felgenhornprofilen versehen sein. Die beiden Lagen des Gürtels können in bekannter Weise aus in eine Gummimischung eingebetteten Festigkeitsträgern, insbesondere aus Stahlcord, bestehen, welche innerhalb jeder Lage parallel zueinander verlaufen, wobei die Stahlcorde der einen Lage in kreuzender Anordnung zu den Stahlcorden der zweiten Lage orientiert sind und mit der Reifenumfangsrichtung jeweils einen Winkel zwischen 15 ° und 40 ° einschließen. Die Verstärkungsprofile sind zwischen der Karkasse und ihrem Lagenumschlag angeordnet und verleihen dem Reifen bei Druckverlust die Selbsttragefähigkeit, so dass über einen gewissen Zeitraum und bei verminderter Geschwindigkeit eine Weiterfahrt möglich ist.

Die Karkasse umläuft die Verstärkungsprofile und die Wulstkerne von innen nach außen und ist somit auf sich selbst rückgeführt, wobei der in Richtung Gürtel verlaufende Abschnitt als Karkasshochschlag bezeichnet wird und bei der dargestellten Ausführungsform unterhalb des Gürtels endet.

Beim Aufbau eines erfindungsgemäß ausgeführten Reifens kann die Karkasse um die Wulstkerne ohne Einlegen von Kernprofilen geführt werden, so dass die Hochschläge bereits radial außerhalb der Wulstkerne zur Karkasse rückgeführt sind. Das sonst separate Kernprofil oder Apex ist integral mit dem Verstärkungsprofil verbunden, welches direkt auf dem Wulstkern aufsitzt.

Durch das Weglassen der ansonsten üblichen Kernprofile wird die Möglichkeit geschaffen, die Verstärkungsprofile in Richtung zu den Wulstbereichen massiver auszuführen, ihre Gummimasse durch den Wegfall der Kernprofile entsprechend zu erhöhen. Die Verstärkungsprofile reichen ferner neben den Wulstkernen bis höchstens zum radial innersten Ende der Wulstkerne.

Das Verstärkungsprofil setzt sich aus zwei oder mehr Profilteilen zusammen, die jedes für sich etwa mondsichelförmig ausgeführt wird und gemeinsam zumindest im Wesentlichen die Querschnittsfläche eines einteiligen Verstärkungsprofils einnehmen, aber aus unterschiedlichen Gummimischungen bestehen.

Jeder Wulstbereich kann an seiner Außenseite und axial außerhalb des Hochschlages mit einem Wulstverstärker, welches im Bereich neben den Wulstkernen beginnend bis auf eine Höhe von vorzugsweise 25% bis 30% der maximalen Querschnittshöhe des Reifens reicht, verstärkt werden. Der Wulstverstärker wird dabei aus textilen oder metallischen Fäden als Cordbahn aufgelegt oder als Einzelfaden aufgespult.

Durch die Erfindung wird ein im Pannenfall selbsttragender Reifen geschaffen, welcher im Normalbetrieb weniger Hitze aufbaut als vergleichbare Reifen mit Verstärkungsprofilen. Ferner läßt er sich einfach herstellen, da normale Bautrommeln verwendet werden können.

## Patentansprüche

1. Fahrzeugluftreifen in radialer Bauart mit einem profilierten Laufstreifen, einem insbesondere mehrlagigen Gürtelverband, einer Innenschicht, einer zumindest einlagig ausgeführten Karkasse, welche in Wulstbereichen um Wulstkerne unter Bildung eines Hochschlages geführt ist, Seitenwänden und mit zumindest je einem im Bereich jeder Seitenwand eingebrachten, im Querschnitt in etwa mondsichelförmigen Verstärkungsprofil, wobei die Karkasse axial innen an der Innenseite des Verstärkungsprofils entlang läuft und der Karkasshochschlag radial außerhalb der Wulstkerne und axial außerhalb des Verstärkungsprofils bis in eine Höhe von wenigstens 15% der maximalen Querschnittshöhe des Reifens um den Wulstkern herum geführt ist,
**dadurch gekennzeichnet, dass**
das Verstärkungsprofil jeweils auf dem Wulstkern aufgesetzt ist, wobei sich das Verstärkungsprofil radial vom Wulstkern bis unterhalb des Gürtelverbandes erstreckt und dass das Verstärkungsprofil aus zwei oder mehr Verstärkungsprofilteilen zusammengesetzt ist, die jedes für sich im Querschnitt etwa mondsichelförmig ausgeführt sind und gemeinsam zumindest im Wesentlichen die Querschnittsfläche eines einteiligen Verstärkungsprofils einnehmen, aber aus unterschiedlichen Gummimischungen bestehen.

2. Fahrzeugluftreifen nach Anspruch 1, **dadurch gekennzeichnet, dass** das Verstärkungsprofil aus wenigstens zwei unterschiedlichen Kautschukmischungen besteht, wobei eine Mischung eine shore A- Härte von 60 - 70, und eine andere Mischung eine shore A - Härte von 70 - 80 aufweist.

3. Fahrzeugluftreifen nach wenigstens einem der Ansprüche 1 bis 2 **dadurch gekennzeichnet, dass** sich der Hochschlag der Karkasse bis mindestens unterhalb des Gürtelverbandes erstreckt.

4. Fahrzeugluftreifen nach einem der Ansprüche 1 bis 3, **dadurch gekennzeichnet, dass** das Verstärkungsprofil aus Kautschukmischungen mit einem Anteil an Silica besteht.

5. Fahrzeugluftreifen nach wenigstens einem der Ansprüche 1 bis 4, **dadurch gekennzeichnet, dass** sich der Hochschlag der Karkasse bis wenigstens in eine Höhe von 15 % der Höhe der Reifenseitenwand erstreckt, wobei eine separate Verstärkungslage ein freies axial außen angeordnetes Ende der Karkasse bedeckt und sich mindestens bis unterhalb des Gürtelverbandes erstreckt.

6. Fahrzeugluftreifen nach wenigstens einem der Ansprüche 1 bis 5, **dadurch gekennzeichnet, dass** axial außerhalb des Karkasshochschlages ein Zusatzprofil angeordnet ist, welches sich vorzugsweise bis auf eine Höhe von 25% bis 30% der maximalen Querschnittshöhe des Reifens erstreckt.

7. Fahrzeugluftreifen nach einem der Ansprüche 1 bis 6, **dadurch gekennzeichnet, dass** die Härte des Zusatzprofils zumindest im Wesentlichen der Härte des Verstärkungsprofils entspricht.

8. Fahrzeugluftreifen nach einem der Ansprüche 1 bis 7, **dadurch gekennzeichnet, dass** die Dicke des Verstärkungsprofils 4 mm bis 25 mm beträgt.

9. Fahrzeugluftreifen nach einem der Ansprüche 1 bis 8, **dadurch gekennzeichnet, dass** axial außen an der Karkasse im Bereich des Wulstkernes ein Wulstverstärker angeordnet ist, welcher aus textilen oder metallischen Fäden besteht.

10. Fahrzeugluftreifen nach einem der Ansprüche 1 bis 9, **dadurch gekennzeichnet, dass** die Karkasse unterschiedliche Festigkeiten aufweist, wobei die Karkasse im axial inneren Bereich eine geringere Festigkeit aufweist, als axial außen.
